# EUROPÄISCHE PATENTSCHRIFT

(11) **EP 2 397 364 B1**
(45) Veröffentlichungstag und Bekanntmachung des Hinweises auf die Patenterteilung: **29.05.2013**
(21) Anmeldenummer: 11004427.8
(22) Anmeldetag: 31.05.2011
(51) Int. Cl.: B60P 7/08

(54) **Vorrichtung zur Festlegung von Ladungssicherungselementen**
Device for fixing load securing elements
Dispositif de fixation d'éléments de sécurisation de chargement

(30) Priorität: 15.06.2010 DE 102010023885
(43) Veröffentlichungstag der Anmeldung: 21.12.2011
(73) Patentinhaber: Fahrzeugwerk Bernard Krone GmbH, 48480 Spelle (DE)
(72) Erfinder: Irion, Manfred, 49757 Werlte (DE)
(74) Vertreter: Pott, Ulrich

(56) Entgegenhaltungen:
- EP-A1- 2 128 044
- EP-A2- 0 933 252
- WO-A1-00/13936
- DE-U1-202008 005 468
- US-A1- 2004 028 497
- US-A1- 2004 081 512

## Beschreibung

Die Erfindung bezieht sich auf eine Vorrichtung zur Festlegung von Ladungssicherungselementen wie beispielsweise Halte- und Ladegurten an einem Aufbauteil eines Fahrzeugaufbaus wobei an dem Aufbauteil des Fahrzeugaufbaus ein Halter festgelegt ist, der einen Aufnahmeraum für das Ladungssicherungselement aufweist, wobei das Ladungssicherungselement zur manuellen Entnahme durch eine Bedienperson in dem Aufnahmeraum gehalten ist und der Halter an einem Längsaußenbaum des Fahrzeugaufbaus festlegbar ist mit einem zum Fahrzeugboden des Fahrzeugaufbaus hin offenen Aufnahmeraum

Ladungssicherungselemente werden für den Transport von Gütern in den unterschiedlichsten Anwendungsbereichen benötigt, beispielsweise in Gestalt von Spanngurten, um das Ladegut z.B. auf einem Fahrzeugboden zu fixieren und zu verspannen. Dazu können auf dem Fahrzeugboden eines Fahrzeugaufbaus aber auch beispielsweise in Ladebordwänden entsprechende Fixierungsösen vorgesehen sein, um entsprechende Spanngurte festzulegen.

In der DE 20 2008 005 468 ist vorgesehen, an oberen Außenbaumteilen eines Fahrzeugaufbaus Klemmhalter vorzusehen, in die jeweils ein Ende eines Spanngurtes einzubringen ist. Somit sind auf beiden Seiten des Fahrzeugaufbaus an den oberen Außenbäumen jeweils Schienen vorzusehen mit Aufnahmen, in denen die Spanngurte klemmend einzuführen sind. Im Fahrzeugboden des Fahrzeugaufbaus sind ösenförmige Umlenkeinrichtungen eingelassen, durch die der Spanngurt hindurchzuführen ist. Die Bedienperson hat mithin die Spanngurte zu spannen und ein Ende je nach den Abmessungen eines Ladegutes schlaufenmäßig so umzulegen, dass die entsprechende Spannkraft auf das Ladegut ausgeübt werden kann. Dies ist nur schwer zu vollziehen, da sich die Klemmschienen im oberen Bereich des Fahrzeugaufbaus befinden.

Aus der DE 20 2008 004 468 U1 ist eine Klemmvorrichtung zur lösbaren Befestigung eines Spanngurtes in Nutzfahrzeugaufbauten bekannt, die als Klemmschiene ausgebildet ist, in der mehrere Spanngurte eingeklemmt werden können. Diese Klemmschiene ist im wesentlichen im Querschnitt U-förmig ausgebildet mit einem Aufnahmeraum, in den eine offene Schlaufe eines Spanngurtes einzubringen ist. Die Klemmschiene hat Klemmabschnitte und soll Teil einer Laufschiene eines Fahrzeuges sein, an der sie sich in Längsrichtung des Fahrzeuges entlang erstreckt. Aufgrund der Gestaltung der Klemmschiene hat sich entlang der gesamten Laufschiene des Fahrzeuges zu erstrecken, womit ein erheblicher Materialaufwand einhergeht, obgleich nur in Längsrichtung des Fahrzeuges wenige Spanngurte zu bevorraten sind. Dies ist nachteilig.

Aus der EP 0 933 252 A2 ist ein Gurthalter für Transportfahrzeuge bekannt, der sich nicht entlang eines oberen Aufbaus eines Nutzfahrzeuges erstreckt, sondern an den jeweiligen Stellen, wo ein Spanngurt benötigt wird. Dieser Halter hat Schenkel, die über Schraub- oder Nietverbindungen an einem Außenbaum eines Nutzfahrzeugaufbaus festzulegen sind und ein Federelement, auf das der Halter aufzurollen ist. Damit kann ein Spannelement jedoch nicht dem Halter entnommen werden. Vielmehr ist dieser jeweils abzurollen. Damit sind dem Einsatz der vorzuhaltenden Spanngurte Grenzen gesetzt.

Aus der US-2004/0028497 A1 ist ein scherenartiges Halteteil zur Aufnahme von Gurten oder anderen Materialien bekannt mit in einem Aufnahmeraum vorgesehenen Haltezähnen, die ein Ende eines Spannmittels festklemmen sollen. Im Bedienteil sind wiederum scherenartige Greifer vorgesehen, um das Aufnahmeteil zu öffnen. Somit eignet sich dieser Halter eher für den mobilen Einsatz, jedoch nicht für die Anordnung in einem Nutzfahrzeugaufbau.

Es ist Aufgabe der vorliegenden Erfindung, eine Vorrichtung zur Festlegung von Ladungssicherungselementen in einem Fahrzeugaufbau zur Verfügung zu stellen, das in materialschonender Weise in einem Nutzfahrzeugaufbau vorzusehen ist und gleichwohl in der Lage ist, Ladungssicherungselemente praxistauglich zu bevorraten.

Zur Lösung dieser Aufgabe zeichnet sich die Vorrichtung zur Festlegung von Ladungssicherungselementen wie beispielsweise Halterungs- und Ladegurt dadurch aus, dass der Halter derart an dem Aufbauteil eines Fahrzeugaufbaus festgelegt ist, dass das Ladungssicherungselement in seiner Anordnung in dem Aufnahmeraum des Halters sich entlang einer im wesentlichen vertikal ausgerichteten Außenwandung zumindest eines Teilbereiches des Aufbauteils erstreckt und der Halter und eine Außenfläche des Aufbauteils Außenflächen für das Ladungssicherungselement ausbilden.

Damit ist eine Vorrichtung zur Festlegung von Ladungssicherungselementen zur Verfügung gestellt, bei der die Vorrichtung das Ladungssicherungselement wie beispielsweise den Halte- und Ladegurt, einen Spanngurt und dergleichen für eine spätere Entnahme und Benutzung als Ladungssicherungselement bevorratet. Das Ladungssicherungselement ist für eine spätere Ladungssicherungsaufnahme unabhängig von seiner Festlegung in dem Halter zu benutzen. Vielmehr ist über die Vorrichtung das Ladungssicherungselement in dem Fahrzeugaufbau an den geeigneten Stellen zu haltern, wobei es von der Bedienperson im Falle einer späteren Ladungssicherung mit nur einem Handgriff dem Aufnahmeraum zu entnehmen ist, beispielsweise indem eine Bedienperson an dem Ladungssicherungselement zieht, wonach das Ladungssicherungselement als loses Bauteil zur Verfügung steht und mit sonstigen, am Fahrzeugaufbau vorgesehenen Anbindungspunkten wie Ösen in Ladebordwänden, Ösen oder sonstigen Befestigungsansätzen im Fahrzeugboden und dergleichen zu verbinden ist.

Dazu können mehrere in Längsrichtung des Fahrzeugaufbaus z.B. an dem Längsaußenbaum des Fahrzeugaufbaus mit Abstand vorgesehene Halter vorgesehen sein, so dass geordnet und übersichtlich an den jeweils benötigten Stellen entsprechende Ladungssicherungselemente beispielsweise von oben herunterhängen und mit nur einem Handgriff jeweils entnommen werden können. Damit ist an dem Halter kein besonderes Klemmprofil zu realisieren, um hohe Spannkräfte aufzunehmen. Gleichwohl sind die Ladungssicherungselemente übersichtlich und geordnet vorzuhalten und zur Verfügung zu stellen.

Hinsichtlich wesentlicher weiterer Ausgestaltungen wird auf die Patentansprüche 2 bis 8 verwiesen. Weitere Vorteile und Einzelheiten der Erfindung ergeben sich aus der nachfolgenden Beschreibung und in der Zeichnung. In der Zeichnung zeigen:
- Fig. 1: eine schematische perspektivische Darstellung eines Ausführungsbeispiels eines Fahrzeugaufbaus;
- Fig. 1a: vergrößert den Ausschnitt "A" in Fig. 1;
- Fig. 2: eine Schnittdarstellung durch den Außenbaum des Ausführungsbeispiels nach Fig. 1 mit dort vorgesehenen Haltern;
- Fig. 3: eine perspektivische ausschnittsweise Darstellung des Außenbaums mit Haltern gemäß Ausführungsbeispiel nach Fig. 2.

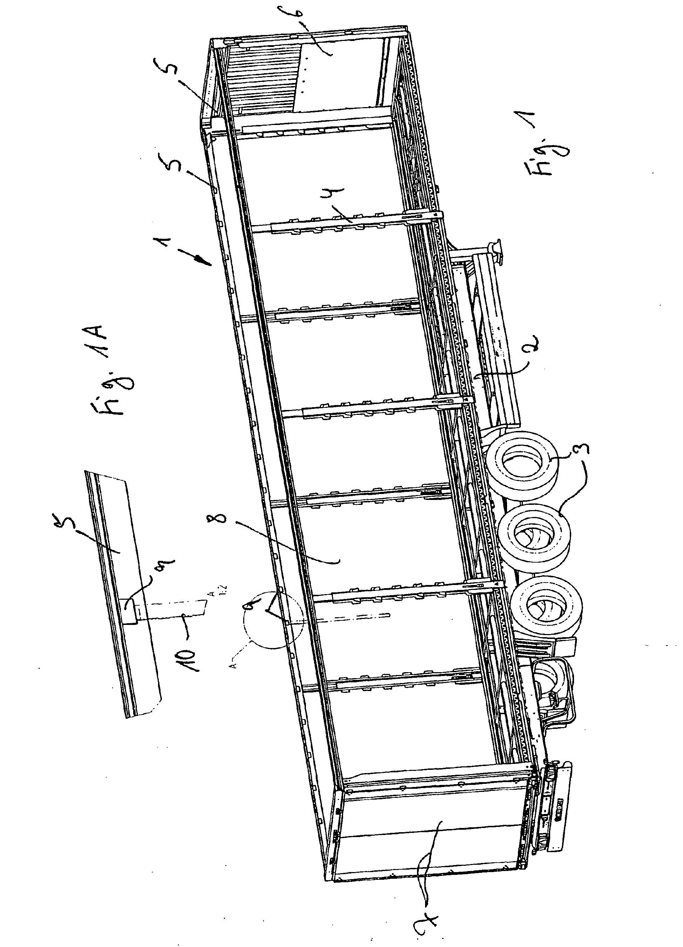

In der Zeichnung sind grundsätzlich gleichwirkende Teile mit übereinstimmenden Bezugsziffern versehen. Der in Fig. 1 dargestellte Fahrzeugaufbau 1 hat ein Fahrgestell 2 mit Rädern 3, Vertikalrungen 4, obere Seitenaußenbäume 5, eine Vorderwand 6, hintere Ladebordtüren 7 sowie Seitenwände 8. Zudem ist in Fig. 1 angedeutet, dass an dem oberen Seitenaußenbaum 5 verschiedene Halter 9 mit Abstand zueinander vorgesehen sein, in denen ein Gurt als Ladungssicherungselement 10 einzuhängen ist.

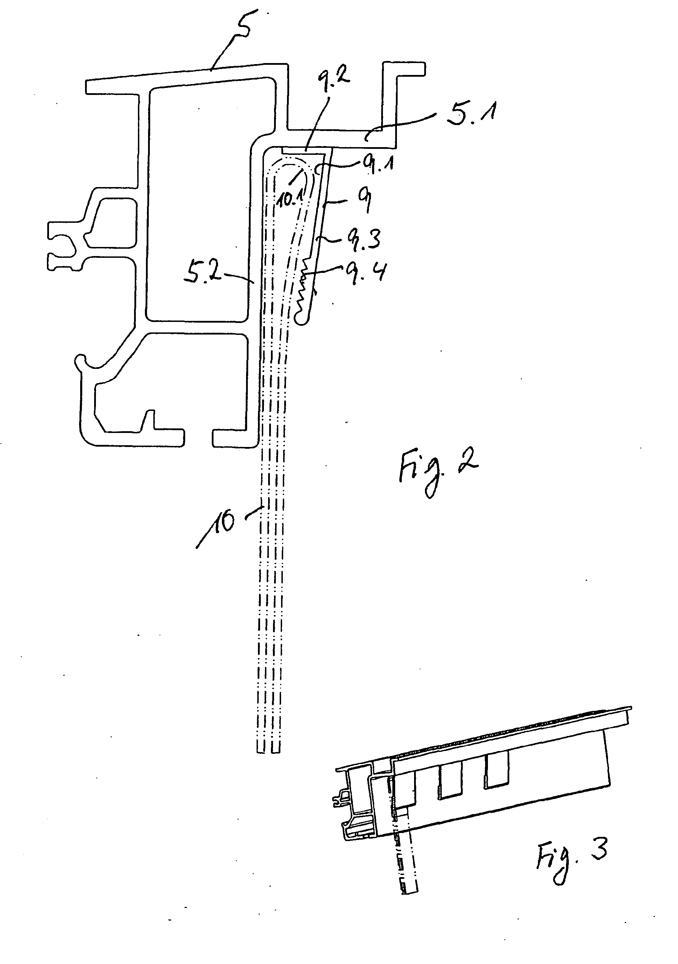

In Fig. 2 ist der Außenbaum 5 näher veranschaulicht. Dieser besteht aus einem Hohlprofil und hat einen seitlichen Schenkel 5.1, an dessen Unterseite der Halter 9 befestigt ist, und zwar derart, dass ein vertikaler Außenschenkelbereich 5.2, an den sich der mit einer Schlaufe 10.1 in den Aufnahmeraum 9.1 des Halters eingehängte Ladungssicherungsgurt 10 in seiner hängenden Ausrichtung anlehnen kann, nach unten weist.

Der Halter 9 hat zudem einen Halteschenkel 9.2, von dem in einem spitzen Winkel 9.3 ein Befestigungsschenkel ausgeht, an dem eine Sägezahnprofilierung 9.4 vorgesehen ist. Der Halter 9 kann aus einem Aluminium- oder Kunststoffmaterial bestehen und beispielsweise mit dem Außenbaum 5 verklebt sein.

## Patentansprüche

1. Vorrichtung zur Festlegung von Ladungssicherungselementen (10) wie beispielsweise Halte- und Ladegurten an einem Aufbauteil (5) eines Fahrzeugaufbaus (1) wobei an dem Aufbauteil (5) des Fahrzeugaufbaus (1) ein Halter (9) festgelegt ist, der einen Aufnahmeraum (9.1) für das Ladungssicherungselement (10) aufweist, wobei das Ladungssicherungselement (10) zur manuellen Entnahme durch eine Bedienperson in dem Aufnahmeraum (9.1) gehalten ist und der Halter (9) an einem Längsaußenbaum (5) des Fahrzeugaufbaus festlegbar ist mit einem zum Fahrzeugboden des Fahrzeugaufbaus (1) hin offenen Aufnahmeraum (9.1), **dadurch gekennzeichnet, dass** der Halter (9) derart an dem Aufbauteil eines Fahrzeugaufbaus (1) festgelegt ist, dass das Ladungssicherungselement (10) in seiner Anordnung in dem Aufnahmeraum (9.1) des Halters (9) sich entlang einer im wesentlichen vertikal ausgerichteten Außenwandung (5.2) zumindest eines Teilbereiches des Aufbauteils (5) erstreckt und der Halter (9) und eine Außenfläche (5.2) des Aufbauteils (5) Außenflächen für das Ladungssicherungselement (10) ausbilden.

2. Vorrichtung zur Festlegung von Ladungssicherungselementen nach Anspruch 1, **dadurch gekennzeichnet, dass** mehrere mit Lageabstand zueinander vorgesehene Halter an dem Aufbauteil (5) des Fahrzeugaufbaus (1) vorgesehen sind.

3. Vorrichtung zur Festlegung von Ladungssicherungselementen nach einem der Ansprüche 1 oder 2, **dadurch gekennzeichnet, dass** der Halter (9) aus einem Metall- oder einem Kunststoffmaterial besteht.

4. Vorrichtung zur Festlegung von Ladungssicherungselementen nach einem der Ansprüche 1 bis 3, **dadurch gekennzeichnet, dass** der Halter (9) an dem Aufbauteil (5) des Fahrzeugaufbaus (1) mit einem Halteschenkel (9.2) festlegbar ist und von diesem Halteschenkel (9.2) unter einem spitzen Winkel ein Klemmschenkel (9.3) zur Halterung des Ladungssicherungselementes (10) ausgeht.

5. Vorrichtung zur Festlegung von Ladungssicherungselementen nach einem der Ansprüche 1 bis 4, **dadurch gekennzeichnet, dass** der Halter (9) mit einer Profilierung (9.4) zur Festlegung des Ladungssicherungselementes (10) versehen ist.

6. Vorrichtung nach Anspruch 5, **dadurch gekennzeichnet, dass** die Profilierung (9.4) als Sägezahnprofilierung ausgebildet ist.

7. Vorrichtung zur Festlegung von Ladungssicherungselementen nach einem der Ansprüche 1 bis 6, **dadurch gekennzeichnet, dass** das Ladungssicherungselement (10) für eine Anordnung in dem Aufnahmeraum (9.1) schlaufenförmig umgebogen ist.

8. Vorrichtung zur Festlegung von Ladungssicherungselementen nach einem der Ansprüche 1 bis 7, **dadurch gekennzeichnet, dass** der Halter (9) mit dem Aufbauteil (5) des Fahrzeugaufbaus (9) verklebt, vernietet, verschweißt oder formschlüssig verbunden ist.

## Claims

1. Device for fixing load-securing elements (10) such as tether or retaining straps on a body section (5) of a vehicle body (1), wherein a holder (9), which has a receiving space (9.1) for the load-securing element (10), is fixed on the body section (5) of the vehicle body (1), wherein the load-securing element (10) is held in the receiving space (9.1) for manual removal by an operator and the holder (9) can be fixed to a lengthwise external beam (5) of the vehicle body with a receiving space (9.1) open towards the floor of the vehicle body (1), **characterized in that** the holder (9) is fixed to the body section of the vehicle body (1) in such a way that the load-securing element (10), in its arrangement in the receiving space (9.1) of the holder (9), extends along an essentially vertically aligned outer wall (5.2) of at least a partial area of the body section (5) and the holder (9) and an outer surface (5.2) of the body section (5) form outer surfaces for the load-securing element (10).

2. Device for fixing load-securing elements as in claim 1, **characterized in that** provision is made of a plurality of holders spaced at a distance from one another on the body section (5) of the vehicle body (1).

3. Device for fixing load-securing elements as in claim 1 or claim 2, **characterized in that** the holder (9) is made of a metal or plastic material.

4. Device for fixing load-securing elements as in one of claims 1 through 3, **characterized in that** the holder (9) can be fixed on the body section (5) of the vehicle body (1) with a holding shank (9.2), and a clamping shank (9.3) for holding the load-securing element (10) extends under an acute angle from this holding shank (9.2).

5. Device for fixing load-securing elements as in one of claims 1 through 4, **characterized in that** the holder (9) is equipped with a profile (9.4) for fixing the load-securing element (10).

6. Device as in claim 5, **characterized in that** the profile (9.4) is configured as a saw-tooth profile.

7. Device for fixing load-securing elements as in one of claims 1 through 6, **characterized in that** the load-securing element (10) is bent in the form of a loop for arrangement in the receiving space (9.1).

8. Device for fixing load-securing elements as in one of claims 1 through 7, **characterized in that** the holder (9) is cemented, riveted, welded, or connected in a positively locking manner to the body section (5) of the vehicle body (9).

## Revendications

1. Dispositif de fixation d'éléments de sécurisation de chargement (10) tels que des sangles de retenue et de chargement sur une partie (5) d'une carrosserie de véhicule (1), un support (9) étant fixé sur la partie (5) de la carrosserie de véhicule (1), lequel support présente un espace de réception (9.1) pour l'élément de sécurisation de chargement (10), l'élément de sécurisation de chargement (10) étant maintenu pour le retrait manuel par un opérateur dans l'espace de réception (9.1) et le support (9) pouvant être fixé sur un timon extérieur longitudinal (5) de la carrosserie de véhicule avec un espace de réception (9.1) ouvert vers le plancher du véhicule de la carrosserie de véhicule (1), **caractérisé en ce que** le support (9) est fixé sur la partie d'une carrosserie de véhicule (1) de telle manière que l'élément de sécurisation de chargement (10) s'étende dans son agencement dans l'espace de réception (9.1) du support (9) le long d'une paroi extérieure (5.2) orientée sensiblement verticalement au moins d'une zone partielle de la partie de la carrosserie (5) et le support (9) et une surface extérieure (5.2) de la partie de la carrosserie (5) réalisent des surfaces extérieures pour l'élément de sécurisation de chargement (10).

2. Dispositif de fixation d'éléments de sécurisation de chargement selon la revendication 1, **caractérisé en ce que** plusieurs supports prévus à distance les uns par rapport aux autres sont prévus sur la partie (5) de la carrosserie de véhicule (1).

3. Dispositif de fixation d'éléments de sécurisation de chargement selon l'une quelconque des revendications 1 ou 2, **caractérisé en ce que** le support (9) se compose d'un matériau métallique ou d'un matériau plastique.

4. Dispositif de fixation d'éléments de sécurisation de chargement selon l'une quelconque des revendications 1 à 3, **caractérisé en ce que** le support (9) peut être fixé sur la partie (5) de la carrosserie de véhicule (1) avec une branche de retenue (9.2) et une branche de serrage (9.3) part de cette branche de retenue (9.2) selon un angle aigu pour supporter l'élément de sécurisation de chargement (10).

5. Dispositif de fixation d'éléments de sécurisation de chargement selon l'une quelconque des revendications 1 à 4, **caractérisé en ce que** le support (9) est pourvu d'un profilage (9.4) pour la fixation de l'élément de sécurisation de chargement (10).

6. Dispositif selon la revendication 5, **caractérisé en ce que** le profilage (9.4) est réalisé comme un profilage en dents de scie.

7. Dispositif de fixation d'éléments de sécurisation de chargement selon l'une quelconque des revendications 1 à 6, **caractérisé en ce que** l'élément de sécurisation de chargement (10) est replié en boucle pour un agencement dans l'espace de réception (9.1).

8. Dispositif de fixation d'éléments de sécurisation de chargement selon l'une quelconque des revendications 1 à 7, **caractérisé en ce que** le support (9) est collé, rivé, soudé ou relié par complémentarité de formes à la partie (5) de la carrosserie de véhicule (9).
